# EUROPEAN PATENT SPECIFICATION

(11) **EP 1 513 164 B1**
(45) Date of publication and mention of the grant of the patent: **13.10.2010**
(21) Application number: 04445090.6
(22) Date of filing: 07.09.2004
(51) Int. Cl.: H01B 3/02, H01H 13/70

(54) **Light emitting electronic component**
Elektronisches elektrolumineszentes Bauteil
Composants électronique électroluminescent

(30) Priority: 08.09.2003 JP 2003315803; 08.09.2003 JP 2003315804
(43) Date of publication of application: 09.03.2005
(73) Proprietor: POLYMATECH CO., LTD., Tokyo 103-8424 (JP)
(72) Inventor: Nakanishi, Yutaka, Machida-shi Tokyo 194-0044 (JP)
(74) Representative: Estreen, Lars J.F.

(56) References cited:
- EP-A1- 1 039 493
- EP-A2- 1 265 261
- JP-A- 11 054 267

## Description

The present invention relates to a light emitting component used for an electronic appliance such as a mobile phone, a portable information terminal, a remote control used for a household electric appliance and a key board. More specifically, the present invention relates to a key pad that illuminates switches by using electroluminescence materials.

Translucent key pads are widely used for operation of electronic appliances such as mobile phones. A key pad has a translucent resin key top which functions as a switch. In order to identify each key top, indicators such as alphanumeric characters and symbols are provided on the top surface or the bottom surface of the key top. Each switch can be made visible and identifiable by illuminating the indicator provided on the key top by means of back lighting when used under low-light conditions.

Conventionally light emitting diodes (LEDs) are used for the back lighting of translucent key pads. LEDs are provided on the back surface of a substrate having the key tops. Since contacts used for switching operations are provided beneath each key top, the back lighting cannot be provided. Accordingly, LEDs are disposed in between adjacent key tops, however the light emitted from the LEDs cannot sufficiently transmit to the key tops with the result of insufficient overall illumination efficiency due to lack of uniformity in brightness of adjacent keys.

Push button switches using electroluminescent light emitting devices as a light source are known in the art. The light emitted from the electroluminescent device enters the back surface of the switch comprising a translucent resin molding and is visible through the resin molding. While electroluminescent devices include organic electroluminescent device and inorganic electroluminescent device, inorganic electroluminescent devices are often used in applications for push button switches because they do not react very sensitively to moisture in the atmosphere. For example, Japanese Utility Model Laid Open Publication 62-165615 discloses a light emitting membrane switch, Japanese Laid-Open Patent Publication 9-50728 discloses a light illuminating switch provided with a display sheet having a transparent key top thereon, and Japanese Laid-Open Patent Publication 2002-216570 discloses an operation key used for electronic appliances such as mobile telephones.

The problem of the lack of uniformity in the emitted light and the darkness in the case of using LEDs for the backlighting of the key tops are not found in the above conventional art since the electroluminescent light emitting portion emits light beneath each key top. However, since the above switches have structures, which deform by pushing the electroluminescent panels in operations, the electroluminescent light emitting portions are subjected to bending load. Further, when structures in which a portion of the electroluminescent device is pushed by a hard key top are used, any layer within the electroluminescent device, such as the emitting layer, is destroyed or severely damaged and results in failure of illumination. Such key pads cannot be used in electronic appliances, such as mobile phones, in which input operations are often performed.

Various attempts have been made to eliminate damage to electroluminescent light emitting portions in repeated operations. For example, Japanese Utility-Model Laid-Open Publication 63-199420 discloses a push button device incorporating an electroluminescent device in a concave portion disposed on the back surface of the key top and extending an electrode from the electroluminescent device. While the problem of damage to the emitting layer is prevented in this structure by incorporating the electroluminescent device within the key top, the structure only enables forming an indicator layer on the top surface of the key top. The indicator layer cannot be formed on the back side of the key top. The limitation with respect to the position at which the indicator is provided can complicate the production steps for the key top.

Further, since the dispersion type EL panel generally uses an alternating voltage, mechanical vibration can occur during light emission. The vibration causes noise. Accordingly, when a dispersion type EL panel is used in communication devices, such as mobile phones, without taking any measures to prevent the vibration, problems such as uncomfortable vibration and deterioration in audio information can occur. Therefore Japanese Laid-Open Patent Publication 11-54267 discloses attempts to decrease transmission of vibration by providing a cutout or a hole in the surrounding for each light emitting portion for compensation for electrodes and connecting portions comprising substrate films, which connect the plurality of local light emitting regions. Further, the emitting layer, a dielectric layer and a backside electrode can be provided partly with minimal area corresponding to the plurality of the local light emitting portions.

While these measures were effective for vibration problems in electroluminescent devices, the EL panels can grow thick due to increase in the number of components. In addition, some cases required provision of additional measures against moisture.

EP-A2-1 265 261 is directed to a keypad for mobile phone with electroluminescent element. The keypad includes an EL element which is tightly, disposed contacting between the base pad member and the upper pad member, thereby alleviating the noise and the vibration. However, the EL element is formed into a continuous shape under the keys so that pressing of the keys could damage the EL element.

EP-A1-1 039 493 is directed to an EL-combined sheet switch, in which the electromagnetic noise from the EL sheet is blocked by the shield layer.

Further, it is necessary to provide electric power from the power source to the EL panel disposed with the EL devices. Conventionally a separate component is used for a connector to connect the electrode on the circuit board and the power source, for example as shown in Japanese Laid-Open Patent Publication 2003-115912, Japanese Laid-Open Patent Publication 2003-87388 and Japanese Laid-Open Patent Publication 2001-103142. However, since the connectors are very small components, assembly to the casing and alignment with the EL panel electrodes and the substrate electrodes required troublesome tasks. The assembly often depended on manual procedures so that it was hindrance to efficient production.

An object of the invention is to provide a key pad which uses a desirable EL panel with respect to uniformity and intensity of illumination and which is not subject to destruction or severe damage of the emitting layer during repeated key-push operations.

Another object of the invention is to decrease vibration noise which is generated when the EL panel emits light.

A further object of the invention is to provide a vibration absorbing sheet for absorbing vibration which occurs when the EL devices emits light by using alternating electric current, for example in dispersion-type EL devices.

In order to achieve the above objectives, a light emitting electronic component in which light emitted by an electroluminescent panel is visible through a translucent molding, is provided. The electroluminescent panel comprises an electroluminescent light emitting region having a first surface and a second surface opposite to the first surface and a non-emitting region. The translucent molding is disposed in contact with the first surface of the electroluminescent light emitting region. A vibration absorbing sheet is disposed in contact with the second surface of the electroluminescent light emitting region so as to absorb vibration which is generated during light emission of the electroluminescent panel and characterized by a connector embedded in the vibration absorbing sheet for electrically connecting the electroluminescent panel and a power source.

The invention, together with objects and advantages thereof, may best be understood by reference to the following description of the presently preferred embodiments together with the accompanying drawings in which:
FIG. 1 is a perspective view showing a portion of a mobile phone incorporating a key pad;
FIG. 2 is an exploded perspective view showing a key pad and a circuit board according to one embodiment;
FIG. 3 is an exploded perspective view showing a key pad and a circuit board according to another embodiment;
FIG. 4 is an exploded perspective view showing a key pad and a circuit board according to another embodiment;
FIG. 5 is a cross sectional view taken along a line 5-5 of FIG. 1;
FIG. 6 is a cross sectional view showing the operation of the translucent molding in the depressed state;
FIG. 7 is a cross sectional view showing the operation of the translucent molding in the depressed state;
FIG. 8(a) is a cross sectional view showing an electroluminescent light emitting component according to one embodiment of the invention;
FIG. 8(b) is a cross sectional view showing an electroluminescent light emitting component according to another embodiment of the invention;
FIG. 8(c) is a cross sectional view showing an electroluminescent light emitting component according to a variant of the embodiment of the invention shown in FIG. 8(b);
FIG. 9 is a perspective view showing a portable information terminal incorporating an electronic component;
FIG. 10 is an exploded perspective view of the information terminal shown in FIG. 9; and
FIG. 11 is a cross sectional view showing the inside of the information terminal.

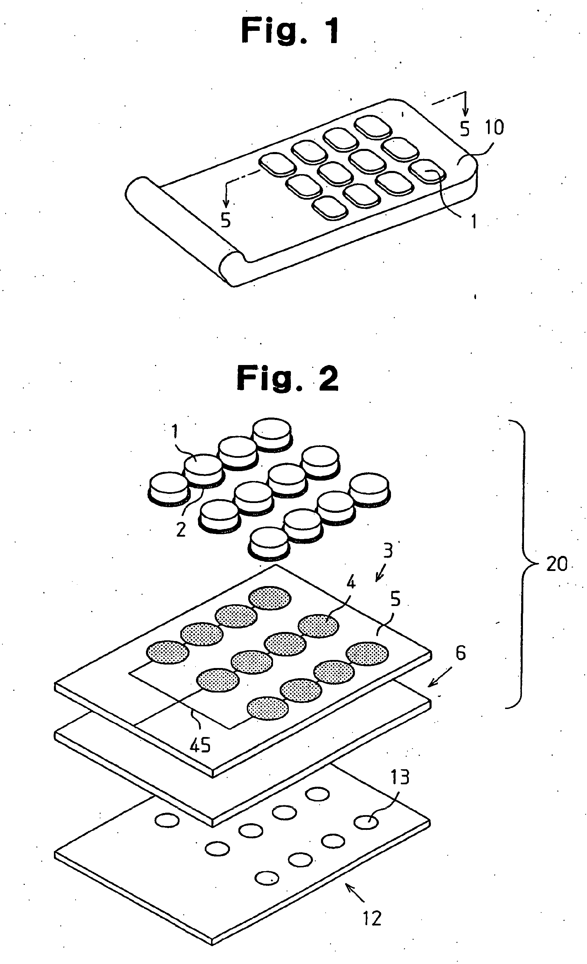

A first embodiment in accordance with the invention applied to the key pad portion of a mobile phone is described below by referring to the drawings. FIG. 1 is a perspective view showing the key pad portion of the mobile phone. A plurality of translucent moldings 1 are disposed in the casing 10 of the mobile phone. Key press operations are available by means of the translucent moldings 1.

FIG. 2 is an exploded perspective view showing components contained inside the casing 10. A key pad 20 and a circuit board 12 are contained in the casing 10. The key pad 20 is a component incorporating an electroluminescent device, comprising a translucent molding 1, an EL panel 3 and a vibration absorbing sheet 6. When operating the mobile phone, the connection 13 on the circuit board 12 is actuated by pushing down the translucent molding 1 through the EL panel 3. The light emitted by the light emitting portion 4 of the EL panel 3 is visible on the top surface of the casing 10 by transmission through the translucent molding 1. Each component is described in more detail below.

The translucent molding 1 is pushed down during operation of the mobile phone. The translucent molding 1 can be formed from a thermoplastic resin or a thermosetting resin having translucency. For example, thermoplastic resins such as polycarbonate resin and acrylic resin, or thermosetting resins such as epoxy resin and silicone resin can be used. The translucent molding 1 is formed into a desired shape through production methods such as injection molding by using a resin having translucency, in other words, which transmits visible light.

An indicator layer 2 is disposed on the top surface or the bottom surface of the translucent molding 1 so that the operation of each button or key is identified. The indicator layer 2 can either be disposed on the entire surface of the translucent molding 1 or on only a part of the surface. The methods for forming the indicator layer 2 include screen printing or pad printing using light shielding or translucent color paintings, plating of metal thin films, such as aluminum and chromium, coating by vapor deposition, and thermal transfer printing of a coating or a metal thin film. There is no limitation to the method so long as it is an indicator process by a material transmitting light. The bottom surface of the translucent molding 1 can be either marked uniformly or formed with patterns such as alphanumeric characters or symbols by coating or laser processing.

The EL panel 3 is disposed under the translucent molding 1. The EL panel 3 includes a plurality of light emitting portions 4 arranged in a matrix. The translucent moldings 1 are visible due to light emitted from the light emitting portions 4 in low-light conditions so that the operation of the mobile phone is available. The shape of each light emitting portion 4 is formed into generally the same contour as the contact surface with the translucent molding 1 or slightly smaller than the contour of the contact surface of the translucent molding 1. By using this structure, the light emitting portions 4 are not destroyed due to pushing pressure from a hard key top. The light emitted from the EL light emitting portion 4 transmits through the translucent molding 1 disposed above the EL light emitting portion 4 and is visible from the top of the casing 10. Each light emitting portion 4 is surrounded by a non-emitting portion 5 so that the light emitting portions 4 are connected.

A conductive compensation electrode 45 can be formed to extend from each of a transparent electrode layer 41 and a backside electrode layer 44 to the light emitting portions 4 to provide alternating voltage to the light emitting portions 4.

The vibration absorbing sheet 6 is disposed underneath the EL panel 3. The vibration absorbing sheet 6 absorbs vibration which is generated at the EL panel 3 when emitting light. The vibration absorbing sheet 6 is a rubber-like elastomer which comprises a synthetic resin or thermoplastic elastomer and which is formed into a sheet-shaped molding. Since the vibration absorbing sheet 6 contacts the light emitting regions 4 of the EL panel 3, the vibration noise that is generated along with light emission can be attenuated. The vibration noise can further be muted by using a synthetic resin or thermoplastic elastomer having high capability to absorb vibration for the vibration absorbing sheet 6. Examples of the synthetic resin are silicone rubber, butyl rubber, urethane rubber and acrylic rubber. Examples of the thermoplastic elastomers are styrene based, olefin based, urethane based or polyester based thermoplastic elastomer. An alloy material containing the above materials can also be used.

The circuit board 12 is disposed beneath the vibration absorbing sheet 6. Contacts 13 are provided on the circuit board 12 to correspond to the positions of the translucent molding 1.

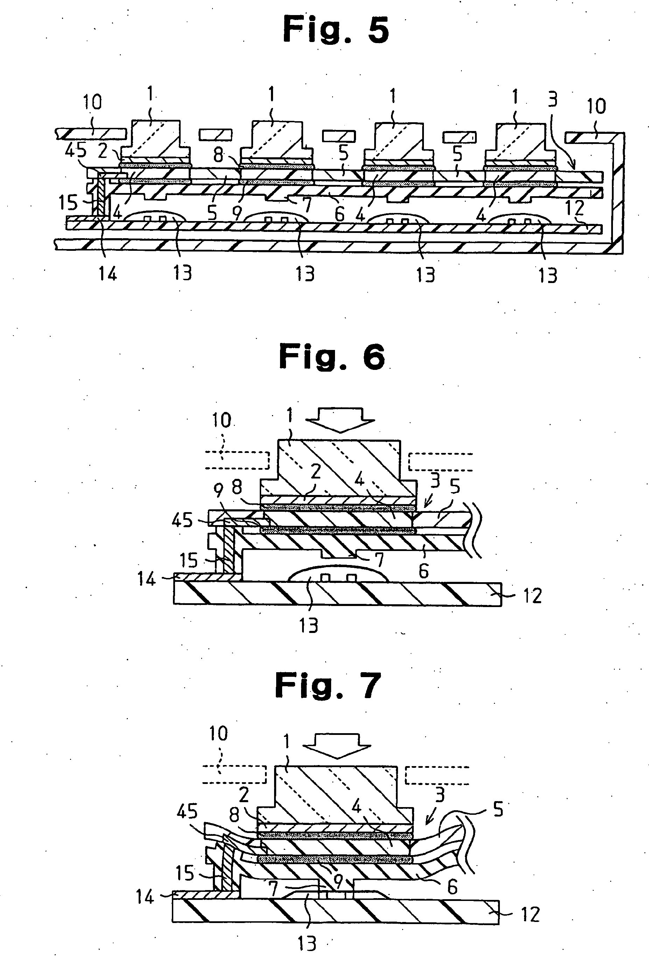

FIG. 5 is a cross sectional view taken along line 5-5 of FIG. 1. In FIG. 5, the translucent molding 1 and the EL panel 3 are adhered through an adhesive layer 8 and the EL panel 3 and the vibration absorbing sheet 6 are adhered through an adhesive layer 9. The EL panel 3, the translucent molding 1 and the elastomer sheet 6 are attached by adhesion, fusion bonding, pressure-sensitive adhesion or welding. Other than adhering the previously formed translucent molding 1 and elastomer sheet 6 to the EL panel 3, it is also possible to form the translucent molding 1 or the elastomer sheet 6 by curing a liquid polymer material on the EL panel 3.

The operation of the switching portion is next described by referring to FIGS. 6 and 7. A projection 7 is disposed on the vibration absorbing sheet 6 to correspond to the translucent molding 1. The contact switch 13 on the circuit board 12 is depressed or pushed by the projection 7. The projection 7 can have any shape. It can be a disc spring disposed on the circuit board 12, or a semi-spherical or column shaped structure for pushing an electric switch such as a polydome or a membrane switch. As shown in FIG. 7, the contact switch 13, such as a metal disk spring, is pushed through the EL panel 3 and the vibration absorbing sheet 6 by pressing the translucent molding 1 to perform a switching operation. Bending of the EL light emitting portion 4 will not happen due to forming the EL light emitting portion 4 to have the same shape as the contour of the contact surface of the translucent molding 1 or a contour smaller than the contact surface. Accordingly, the EL light emitting portion 4 is not destroyed by pressure from the translucent molding 1, which comprises a hard resin material. By providing the flexible vibration absorbing sheet 6, the impact from the translucent molding 1 as well as the vibration generated through light emission from the EL panel 3 can be absorbed.

In a preferred embodiment, the EL panel 3 is an EL panel using an alternating voltage, specifically a dispersion type inorganic EL panel. While an advantage of improved resistivity of the EL device can be obtained also in the case of using an organic EL panel, the organic EL panel requires an additional mechanism for protecting the organic EL devices. The dispersion type EL panel used in the present invention includes a light emitting region in which at least a transparent electrode layer, an emitting layer, a dielectric layer and a backside electrode layer are laminated.

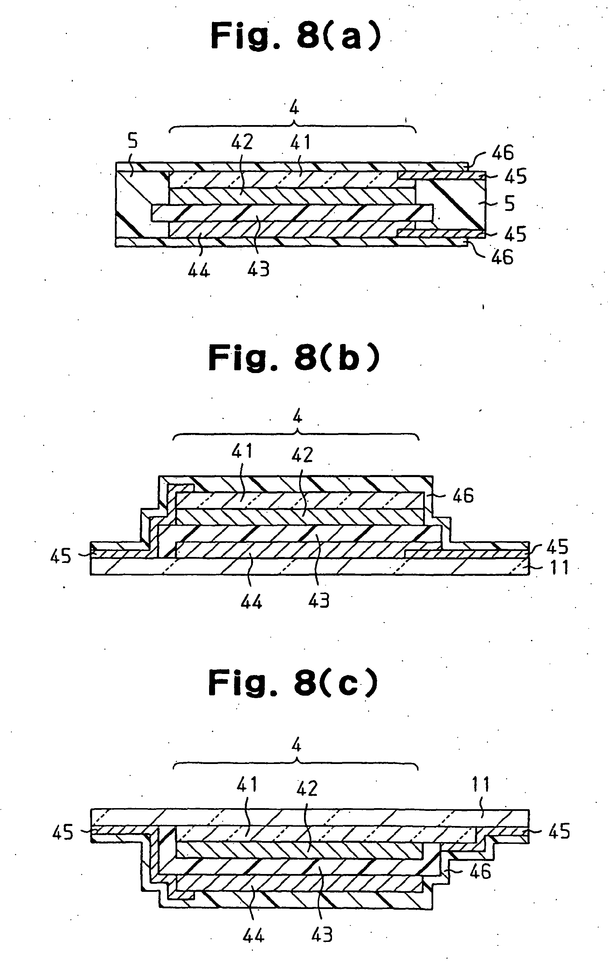

FIGS. 8(a) to 8(c) schematically show cross sectional views of each layer constituting preferred EL panels 3. The EL light emitting portion 4 comprises a transparent electrode layer 41, an emitting layer 42, a dielectric layer 43 and a backside electrode layer 44 in this order from the top surface side.

FIG. 8(a) shows a cross sectional view of the EL panel 3 provided with a non-emitting region 5 to surround the EL light emitting portions 4. FIGS. 8(b) and 8(c) show a cross sectional view of the EL panels 3 in which a resin film 11 is used as a substrate and EL light emitting portions 4 are disposed in prescribed regions on the substrate, instead of connecting the EL light emitting portions 4 by means of the non-emitting region 5 shown in FIG. 8(a). In FIG. 8(b), the EL light emitting portion 4 is formed on the resin film 11 substrate. In FIG. 8(c), the EL light emitting portion 4 is formed under the resin film 11 substrate. The light emitting portion 4 can be formed into a structure in which the backside electrode layer 44, the dielectric layer 43, the emitting layer 42 and the transparent electrode layer 41 are formed in this order on a top surface of the resin film 11 as shown in FIG. 8(b), or it can be formed into a structure in which the transparent electrode layer 41, the emitting layer 42, the dielectric 43 and the backside electrode layer 44 are formed in this order from the reverse side of the resin film 11.

A circuit for providing alternating voltage can be disposed by forming the compensation electrode 45 having conductivity to extend from each of the transparent electrode layer 41 and the backside electrode layer 44. The compensation electrode 45 can be formed, either prior to printing the backside electrode layer 44 (see FIG. 8(b)) or after forming the backside electrode 44 by changing the printing order of the layers. The EL light emitting portion 4 is preferably covered entirely by a coating film (resist 46) having an electrical insulative property for preventing electric leak.

The transparent electrode layer 41 comprises a material having translucency and conductivity. Examples of the transparent electrode layer 41 include a thin film formed by vapor deposition or sputtering of indium-tin oxide (hereinafter referred to as "ITO") or a thin film formed by using a coating composition dispersed with microcrystal grains of ITO or tin. It is also possible to use a thin film formed by using a coating composition comprising organic conductive resin such as polyacetylene based conductive polymer, polythiophene based conductive polymer, polypyrrole based conductive polymer or polyparaphenylene based conductive polymer in solubilized form.

The emitting layer 42 is generally formed by a coating composition which contains luminous body grains. Zinc sulphide doped with copper to which manganese or aluminum is added for an activator agent for changing the color of the emitted light is known in the art as the luminous body. A luminous body with improved moisture resistivity by coating oxide or nitride on the surface is also known in the art.

The dielectric layer 43 is a layer having an electrical insulative property and high dielectric constant, and can be formed, for example, by using a coating composition of resins, such as fluoride resin, cyanoresin, or polyester resin dispersed with micro grains of barium titanate.

The backside electrode layer 44 can be formed from a thin film formed by vapor deposition or sputtering of aluminum, silver or ITO, a metallic foil of aluminum, copper, etc., or a coating composition of resins such as polyester resin, urethane resin, acrylic resin or silicone resin dispersed with micro grains of carbon, silver, copper, and etc.

The EL light emitting portion 4 comprises a lamination of at least the above described transparent electrode layer 41, the emitting layer 42, the dielectric layer 43 and the backside electrode layer 44. The light emitting portion 4 is formed to have a contour shape of an area, in which the emitting layer 42 and the backside electrode layer 44 overlap to emit light, generally the same as that of the contact surface with the translucent molding 1.

In the first embodiment of the emitting portion, the EL light emitting portions 4 are connected by the insulative non-emitting region 5 having flexibility to form the EL panel 3 as shown in FIGS. 2 to 5. The non-emitting region 5 can be formed by curing an insulative coating composition or synthetic resin. Alternatively, the non-emitting region 5 can be formed from a thermoplastic or thermosetting resin film by removing the regions corresponding to the area of the EL light emitting portions 4 and connecting the film to the EL light emitting regions 4.

As described above, the EL panel 3 can also be formed by laminating the EL light emitting portions 4 on a top surface or bottom surface of a substrate comprising an insulative resin film 11 having flexibility as shown in FIGS. 8(b) and 8(c). Examples of the resin film 11 used are polyethylene terephthalate, polyethylene naphthalate, polyacrylate, polyimide, nylon, and etc. Alternatively it is also possible to use a copper plated lamination film which has heat resistivity while soldering. The thickness of the resin film 11 is in a range between 10 and 100 µm, preferably between 25 and 75 µm, and more preferably between 25 and 50 µm. The key pad can be handled conveniently without pressing operation of the translucent molding 1 being impacted, when the thickness of the resin film 11 is thin since the flexibility of the EL panel 3 is sufficient. When the thickness of the resin film 11 exceeds 100 µm, the handling of the key pad becomes significantly hard. On the other hand, the processability of the key pad is improved as the resin film 11 becomes thicker. It is very hard to perform mass production of the key pads by using resin films 11 having a thickness of less than 10 µm.

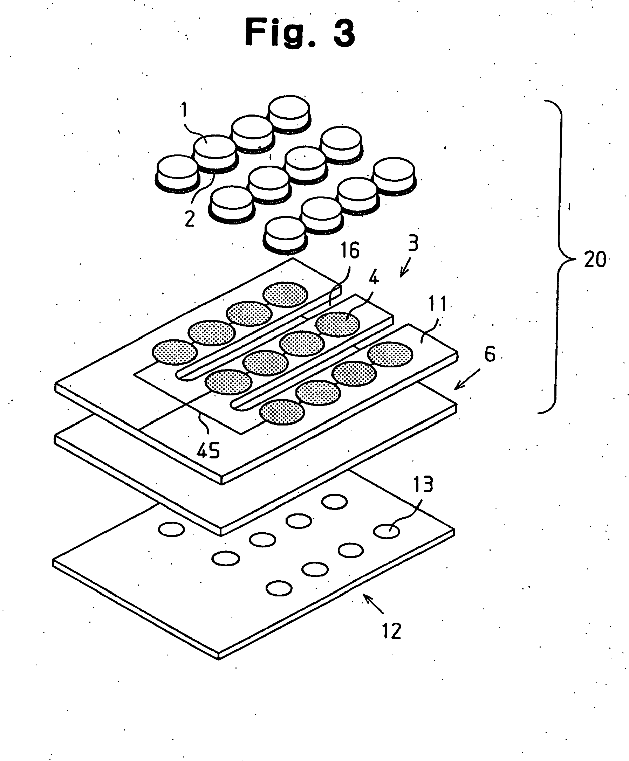

In the second embodiment of the vibration absorbing sheet shown in FIG. 3, a cutout portion 16 or a hole is provided in a region where the EL light emitting portion 4 is not formed on the resin film 11. The transmission of the vibration is eliminated, as well as the pressing load of the key being decreased, by providing the cutout portion 16 on the resin film to enable easier pressing of the translucent molding 1. Further, the cutout portion 16 is preferably formed into a shape with rounded corners at the inner side edges. Ruptures can be formed on the resin film due to repeated switching operations (key presses), when the corners are sharp, thereby causing disconnections.

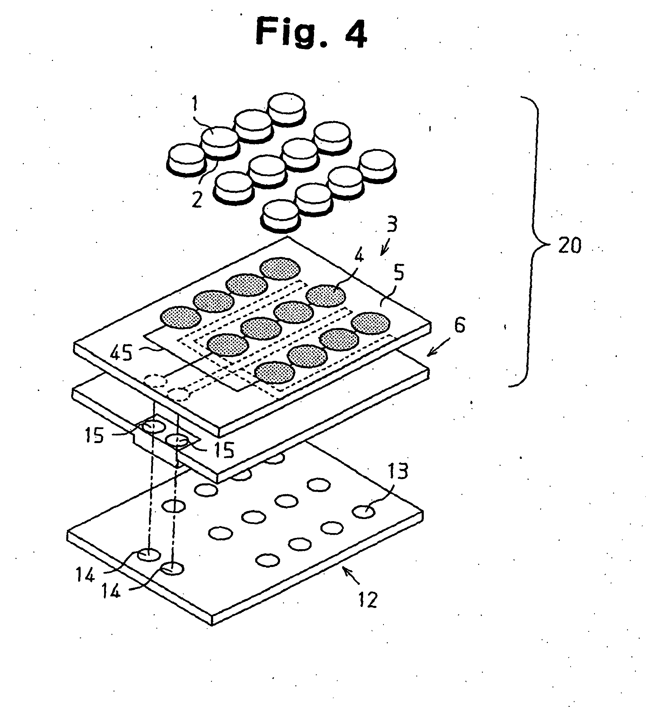

In a third embodiment, a vibration absorbing sheet as shown in FIG. 4 connects the EL panel 3 with the power source by embedding a connector 15 at an edge of the vibration absorbing sheet. The connector 15 electrically connects the compensation electrode 45 of the EL panel and the substrate electrode 14 on the circuit board 12.

The connector 15 is a conductive path due to a conductive medium partially formed within the vibration absorbing sheet 6. As the conductive medium of the connector 15, powders, grains or fibers comprising conductors such as metal or carbon can be used. The connector 15 can be formed by incorporating a preformed elastic connector into the vibration absorbing sheet 6. Alternatively, the connector 15 provided with a conductive path can be formed by using magnetic conductive grains by such as nickel and orientating the magnetic conductive grains by applying a magnetic field from the upper and lower sides of the vibration absorbing sheet 6. This connector 15 has elasticity due to the rubber-like elastic material of the vibration absorbing sheet 6 and the conductive path also has elasticity. Accordingly, the connector 15 is flexible and an excellent conductive path can be obtained even with low pressure load. The compensation electrode 45 is electrically connected to the substrate electrode 14 on the circuit board 12 since an edge is pressed against the connector 15 provided in the vibration absorbing sheet 6. The light emitting portion 4 is preferably covered by an insulative coating film (resist 46) for preventing electric leak. By embedding the connector 15 into the vibration absorbing sheet 6, there is no need to provide the connector 15 as a separate component so that the space inside the casing 10 can be saved as well as the number of process steps can be decreased.

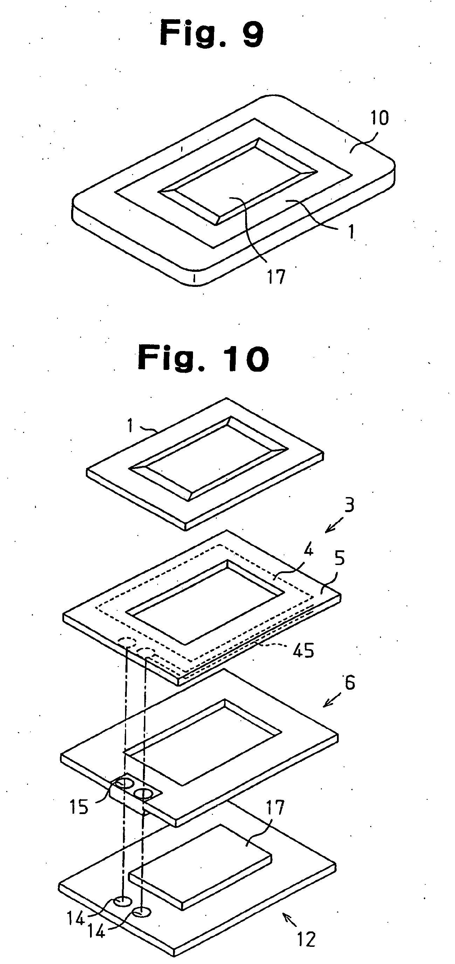

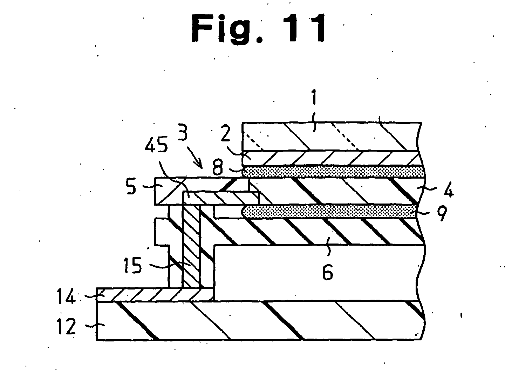

Another embodiment in which a vibration absorbing sheet embedded with the connector 15 at an edge thereof is described by referring to FIGS. 9-11. FIG. 9 is a perspective view of an electronic component provided with the EL panel under the translucent molding 1. An electronic component 17 such as a liquid crystal display device or an EL display device is contained within the casing 10 of the portable terminal. The translucent molding is provided into a cover panel having a rectangular frame is disposed to cover the circumference of the electronic component 17. In this embodiment the electronic component 17 is protected from impact and damage from the outside by the translucent molding.

FIG. 10 is an exploded perspective view of the electronic component of FIG. 9. The EL panel 3 is disposed in the surrounding of the electronic component 17 and the vibration absorbing sheet 6 makes contact underneath the EL panel 3. The vibration absorbing sheet 6 absorbs vibration caused during light emission by the EL panel 3 as well as connecting the EL panel 3 to the power source by the connector 15 embedded therein. The translucent molding 1 provides protection by covering all of the electronic component 17, the vibration absorbing sheet 6 and the EL panel 3 from impact from the outside.

The structure of the EL panel 3 is the same as either of the structure shown in FIG. 8(b) or 8(c). The invention is described in further detail in the Examples shown below.

### Example 1

The translucent molding 1 shown in FIG. 4 is fabricated by injection molding of polycarbonate resin which transmits visible rays. The indicator layer 2 is formed on the bottom surface of the translucent molding 1 by printing light transmitting ink.

An ITO film (manufactured by Oji Tobi Co., OTEC-120), which comprises the film substrate 11, and an ITO thin film provided thereon to be used as the transparent electrode 41 was prepared. The emitting layer 42 was printed from a blue green colored fluorescent paste (manufactured by DuPont, 7151) and the dielectric layer 43 was printed from a dielectric paste (manufactured by DuPont). The backside electrode layer 44 was formed by thermocompression of an aluminum foil having 0.025 mm thickness. Then the insulative resist layer 46 was provided to cover the electrode. The EL panel 3 was thereby fabricated with the light emitting portion 4.

The vibration absorbing sheet comprising silicone rubber and having a semi-spherical shaped projection 7 on one side thereof was fabricated. A conductive path, which functions as the connector 15, comprising gold plated nickel particles as the conductive medium, was formed by applying a magnetic field from the upper and lower sides of prescribed regions to orient the magnetic conductive particles simultaneously with the molding of the vibration absorbing sheet 6.

After adhering the bottom surface of the thereby formed translucent molding 1 and a surface of the ITO film of the EL panel 3 by cyanoacrylate based instant adhesive, the backside of the aluminum foil of the EL panel 3 and the top surface of the vibration absorbing sheet 6 were adhered through cyanoacrylate based instant adhesive to fabricate the key pad.

The key pad was placed and stabilized within the casing 10 so that the projections 7 of the vibration absorbing sheet 6 corresponded to the contact switches 13 formed by disposing metal disc springs on the circuit board 12.

When the EL panel 3 was illuminated by applying alternating voltage of 100V-400Hz between the transparent electrode layer 41 of the ITO film and the backside electrode layer 44 of the aluminum foil, noise due to vibration was not heard.

A wear test was performed by successively pressing the translucent molding 1 for 1,000,000 times under the state in which it was illuminated. No failure was observed in the illumination of the EL panel 3.

### Example 2

The translucent molding 1 shown in FIG. 3 was fabricated by injection molding of visible light transparent polycarbonate resin in a similar manner as Example 1. The indicator layer 2 was formed by printing light transmitting paint on the bottom surface of the translucent molding 1.

The method for producing the EL panel 3 having the EL light emitting portions 4 shown in FIG. 8(a) is described as follows. The EL panel 3 was fabricated by using a fluoride resin plate for providing sufficient strength during process steps. The fluoride resin plate is removed from the EL panel 3 after completing fabrication. In order to form the light emitting portion 4 in the same shape as the contour of the bottom surface of the translucent molding 1 over the fluoride resin plate, the transparent electrode layer 41 was formed from an ITO paste for transparent electrodes (manufactured by DuPont), the emitting layer 42 was formed from blue-green colored fluorescent paste (manufactured by DuPont), the dielectric layer 43 was formed from a dielectric paste (manufactured by DuPont), and the backside electrode layer 44 was formed from a carbon electrode paste (manufactured by DuPont) in this order. The insulative non-illuminating region 5 was formed by printing in the areas between the three EL light emitting portions 43. For example, the non-emitting region 5 comprising insulating film was formed by printing a shape which connects the EL light emitting portions by transparent insulative resist ink (manufactured by Seiko Advance under the trade name of PAL transparent). In order to apply voltage efficiently to the EL light emitting portions 4, the compensation electrode 45 was formed from a paste used for electrodes comprising silver (manufactured by DuPont). The EL panel 3 was then removed from the fluoride resin plate.

The vibration absorbent sheet 6 was fabricated with semi-spherical projections 7 at positions corresponding to switches on the circuit board 12. The vibration absorbing sheet 6 of this example comprised silicone rubber. After the backside surface of the translucent molding 1 and the top surface of the transparent electrode of the EL light emitting portion 4 were adhered by cyanoacrylate based instant adhesive, the backside electrode layer 44 of the EL light emitting portion 4 and the positions of the vibration absorbing sheet 6 underneath of which the semi-spherical projections 7 were disposed, and adhered by cyanoacrylate based instant adhesive.

The key pad was then arranged and fixed within the casing 10 so that the projections 7 were disposed at positions corresponding to the contact switches 13, which were formed by providing metallic disk springs on the circuit board 12.

The EL panel 3 of the key pad was illuminated by applying alternating voltage of 100V-400Hz to the compensation electrode 45. Noise caused by vibration was inaudible.

A wear test was performed by successively pressing the translucent molding 1 for 1,000,000 times under the condition in which light was emitted. There was no defect found in the light emission of the EL panel 3.

### Example 3

FIG. 8(c) is referred to. The key pad of Example 3 was formed similarly to that of Example 2 except that the structure of the EL panel 3 differs in Example 3. The EL panel 3 of Example 3 uses a resin film 11 comprising polyethylene terephthalate having flexibility and an insulative property for the substrate and the substrate was not removed after finishing the EL panel 3.

The method for producing the EL panel 3 is described below. The transparent electrode layer 41 of the EL light emitting portion 4 was formed by etching the ITO film (manufactured by Oji Tobi Co. under the trade name of OTEC-120) formed on one surface of the substrate. The emitting layer 42 was formed by blue green color fluorescent paste (manufactured by Fujikura Kasei), the dielectric layer 43 was formed by a dielectric paste (manufactured by Fujikura Kasei) and the backside electrode layer 44 was formed by paste for carbon electrodes (manufactured by Fujikura Kasei) in this order to form a plurality (four in FIG. 5) of light emitting portions 4. A circuit for the compensation electrode 45 was formed from silver electrode paste (manufactured by Fujikura Kasei) in order to efficiently apply voltage to the EL light emitting portions.

The other structures for the key pad was similar to those described in Example 2.

The EL panel 3 was illuminated by applying alternating voltage of 100V-400Hz to the compensation electrode 45. Noise caused by vibration was inaudible.

A wear test was performed by successively pressing the translucent molding 1 for 1,000,000 times under the condition in which the light was emitted. There was no defect found in the light emission of the EL panel 3.

### Example 4

The translucent moldings 1 shown in FIG. 2 were fabricated by injection molding of polycarbonate resin which transmits visible rays. The indicator layers 2 were formed by printing paste having a light transmissive property on the bottom surface of each of the translucent moldings 1. Polyester based thermoplastic ink (manufactured by Seiko Advance under the trade name of SG-700) was printed for use as a translucent fusion bonding layer, on the bottom surface of the translucent moldings 1.

Polyethylene terephthalate film having flexibility and an insulative property in 25µm of thickness was used as the substrate of the EL panel 3. The transparent electrode 41 was formed by a flexible and printable transparent conductive ink for screen printing (manufactured by AGFA under the trade name of orgacon P3000), the emitting layer 42 was formed by a blue green color fluorescent paste (manufactured by DuPont), the dielectric layer 43 was formed by a dielectric paste (manufactured by DuPont), and the backside electrode layer 44 was formed by a carbon electrode paste (manufactured by DuPont) in this order to form the EL light emitting portions 4. In order to efficiently apply voltage to each of the EL light emitting portions 4, the compensation electrode 45 was formed from silver electrode paste (manufactured by DuPont).

The translucent molding 1 and the EL panel 3 were adhered by thermal fusion by overlaying the backside of the translucent molding 1 and the EL light emitting portions 4 and pressing the EL panel 3 side against a heated metal plate covered with heat dissipating silicone rubber at a temperature set at 180°C for 3 seconds.

An ultraviolet adhesive (manufactured by Three Bond, Co., under the trade name 3002) was spread thinly over areas on the vibration absorbing sheet 6 where they overlap the translucent moldings 1. The EL light emitting portions 4 were overlapped and ultraviolet rays were eradiated from the silicone rubber side and adhered by curing. The key pad was fabricated similarly to Example 2.

### Example 5

The translucent molding 1 was formed into a cover panel by injection molding of acrylic resin having visible ray translucency.

The EL panel 3 shown in FIG. 8(c) was fabricated. The transparent electrode layer 41 was formed by removing unnecessary regions by etching the ITO thin film provided on the ITO film, which was the same as the film used in Example 1. The emitting layer 42 was formed by a blue green color fluorescent paste (manufactured by Fujikura Kasei), the dielectric layer 43 was formed by a dielectric paste (manufactured by Fujikura Kasei), the backside electrode layer 44 was formed from a carbon electrode paste (manufactured by Fujikura Kasei) in this order to form the light emitting portion 4. The compensation electrode 45 was formed from a silver electrode paste (manufactured by Fujikura Kasei) in order to efficiently apply voltage to the light emitting portion 4. The light emitting portion 4 was finished by covering by the resist layer 46, which is an insulating coating film.

The vibration absorbing sheet 6 integrally provided with the connector 15 was fabricated similarly to that of Example 1.

After adhering the translucent molding 1 and the top surface of the light emitting portion 4 by using the cyanoacrylate based instant adhesive, the EL integrated molding was fabricated by adhering the backside of the light emitting portion 4 and the vibration absorbing sheet 6.

The thereby formed EL integrated molding was placed and fixed on the circuit board 12, which includes the electronic component 17. The electronic component 17 was a liquid crystal display device.

The EL panel 3 was illuminated by applying alternating voltage of 100V-400Hz to the transparent electrode layer 41 and the backside electrode layer 44. Noise caused by vibration was inaudible.

### Example 6

In Example 6 the method of forming the key top including the EL panel 3 shown in FIG. 8(c) from process steps different from those of Example 3 is described.

The transparent electrode layer 41 which is flexible and printable was formed from a transparent and conductive ink for screen printing (manufactured by AGFA under the trade name of orgacon P3000) over a film substrate 11 comprising 25µm in thickness of polyethylene naphthalate having flexibility and an insulative property. The emitting layer 42 was formed from a blue green color fluorescent paste (manufactured by DuPont), the dielectric layer 43 was formed from a dielectric paste (manufactured by DuPont), the backside electrode layer 44 was formed by a carbon electrode paste (manufactured by DuPont) in this order, and then the lamination was covered by the resist layer 46, which is an insulative coating film, to complete a plurality (four in FIG. 5) of light emitting portions 4. The compensation electrode 45 was formed from silver electrode paste manufactured by DuPont) in order to efficiently apply voltage to each light emitting portion 4).

The translucent molding 1 and the light emitting portions 4 on the EL panel 3 were overlaid, and were adhered by thermal fusion of the translucent molding 1 and the EL panel 3 by pressing the EL panel 3 side against a heated metal plate, which is covered by a heat dissipating silicone rubber, at a temperature set at 180°C for 3 seconds.

Ultraviolet adhesive (manufactured by Three Bond Co. under the trade name 3002) was spread thinly over the vibration absorbing sheet 6 at regions where it overlaps the translucent molding 1. The light emitting portions 4 of the EL panel 3, which were adhered, were then overlapped and adhered by curing through ultraviolet ray irradiation from the silicone rubber side.

Other structures for forming the EL integrated resin molding were the same as those of Example 2. When the translucent molding 1 was pressed, a good clicking sensation ("feel") was obtained.

Since changes can be made as shown by the different embodiments, the present examples and embodiments are to be considered as illustrative and not restrictive and the invention is defined by the appended claims.

## Claims

1. A light emitting electronic component in which light emitted by an electroluminescent panel (3) is visible through a translucent molding (1), said electroluminescent panel (3) comprising an electroluminescent light emitting region (4) having a first surface and a second surface opposite to the first surface and a non-emitting region (5), said translucent molding (1) disposed in contact with the first surface of the electroluminescent light emitting region (4), said light emitting electronic component comprises a vibration absorbing sheet (6) disposed in contact with the second surface of the electroluminescent light emitting region (4) so as to absorb vibration which is generated during light emission of the electroluminescent panel (3), said light emitting electronic component **characterized by** a connector (15) embedded in the vibration absorbing sheet for electrically connecting the electroluminescent panel and a power source.

2. A light emitting electronic component according to claim 1 **characterized by** said electroluminescent light emitting region (4) comprising a transparent electrode layer (41), an emitting layer (42), a dielectric layer (43) and a backside electrode layer (44).

3. A light emitting electronic component according to claim 1 **characterized by** the electroluminescent panel (3) comprising an insulative resin film (11) and a plurality of electroluminescent light emitting portions (4) laminated on said resin film:

4. A light emitting electronic component according to claim 3 **characterized in that** the resin film (11) has a thickness of 100 µm or less.

5. A light emitting electronic component according to claim 1 **characterized in that** said light emitting electronic component is a cover panel or a key pad.

6. A light emitting electronic component according to claim 1, wherein the light emitting electronic component is a key pad comprising a key including the translucent key top (1) having a contact surface, the first surface of the electroluminescent light emitting region (4) disposed in contact with the translucent key top (1) on the contact surface and the vibration absorbing sheet (6) disposed on the second surface of the electroluminescent light emitting portion (4) opposite to the key top (1), **characterized by** the electroluminescent light emitting region (4) having a contour generally the same as that of said contact surface.

7. A light emitting electronic component according to claim 6 **characterized by** the key pad including the electroluminescent panel (3) including two or more of said electroluminescent light emitting portions (4) and a non-emitting region (5) having flexibility and an insulative property and which connects the electroluminescent light emitting portions (4).

8. A light emitting electronic component according to claim 6 **characterized in that** the key pad including an electroluminescent panel comprising an insulative resin film (11) on which a plurality of the electroluminescent light emitting portions (4) are laminated, and
a cutout region (16) or a hole is disposed in a region of the insulative resin film (11) between said electroluminescent light emitting portions (4).

## Patentansprüche

1. Eine lichtemittierende elektronische Komponente, bei welcher durch ein elektrolumineszentes Feld (3) emittiertes Licht durch eine durchscheinende Form (1) sichtbar ist, wobei das elektrolumineszente Feld (3) einen elektrolumineszenten lichtemittierenden Bereich (4) mit einer ersten Oberfläche und einer zweiten Oberfläche gegenüber der ersten Oberfläche und einen nichtemittierenden Bereich (5) umfasst, wobei die transparente Form (1) in Kontakt mit der ersten Oberfläche des elektrolumineszenten lichtemittierenden Bereichs (4) angeordnet ist, wobei die lichtemittierende elektronische Komponente ein vibrationsabsorbierendes Blatt (6) umfasst, welches in Kontakt mit der zweiten Oberfläche des elektrolumineszenten lichtemittierenden Bereichs (4) angeordnet ist, um Vibrationen zu absorbieren, die während einer Lichtemission des elektrolumineszenten Feldes (3) erzeugt werden, wobei die lichtemittierende elektronische Komponente **gekennzeichnet ist durch** eine Verbindung (15), die in dem vibrationsabsorbierenden Blatt zum elektrischen Verbinden des elektrolumineszenten Feldes und einer Energiequelle eingebettet ist.

2. Lichtemittierende elektronische Komponente nach Anspruch 1, **dadurch gekennzeichnet, dass** der elektrolumineszente lichtemittierende Bereich (4) eine transparente Elektrodenschicht (41), eine emittierende Schicht (42), eine dielektrische Schicht (43) und eine Rückseitenelektrode (44) umfasst.

3. Lichtemittierende elektronische Komponente nach Anspruch 1, **dadurch gekennzeichnet, dass** das elektrolumineszente Feld (3) eine isolierende Harzschicht (11) und eine Vielzahl von elektrolumineszenten lichtemittierenden Abschnitten (4) umfasst, die auf die Harzschicht laminiert sind.

4. Lichtemittierende elektronische Komponente nach Anspruch 3, **dadurch gekennzeichnet, dass** die Harzschicht (11) eine Dicke von 100 µm oder weniger aufweist.

5. Lichtemittierende elektronische Komponente nach Anspruch 1, **dadurch gekennzeichnet, dass** die lichtemittierende elektronische Komponente ein Abdeckfeld oder eine Tastatur ist.

6. Lichtemittierende elektronische Komponente nach Anspruch 1, wobei die lichtemittiemde elektronische Komponente eine Tastatur ist, die eine Taste umfasst, die das durchscheinende Tastenoberteil (1) mit einer Kontaktoberfläche einschließt, wobei die erste Oberfläche des elektrolumineszenten lichtemittierenden Bereichs (4) in Kontakt mit dem durchscheinenden Tastenoberteil (1) auf der Kontaktoberfläche angeordnet ist, und das vibrationsabsorbierende Blatt (6) auf der zweiten Oberfläche des elektrolumineszenten lichtemittierenden Abschnitts (4) gegenüber dem Tastenoberteil (1) angeordnet ist, **dadurch gekennzeichnet, dass** der elektrolumineszente lichtemittierende Bereich (4) eine Kontur aufweist, die im allgemeinen der Kontur der Kontaktoberfläche entspricht.

7. Lichtemittierende elektronische Komponente nach Anspruch 6, **dadurch gekennzeichnet, dass** die Tastatur das elektrolumineszente Feld (3) einschließt, welches zwei oder mehr elektrolumineszent lichtemittierende Abschnitte (4) und einen nicht emittierenden Bereich (5) einschließt, der flexibel ist und eine isolierende Eigenschaft aufweist und welcher die elektrolumineszenten lichtemittierenden Abschnitte (4) verbindet.

8. Lichtemittierende elektronische Komponente nach Anspruch 6, **dadurch gekennzeichnet, dass** die Tastatur ein elektrolumineszentes Feld einschließt, welches eine isolierende Harzschicht (11) umfasst, auf welche eine Vielzahl der elektrolumineszenten lichtemittierenden Abschnitte (4) laminiert sind und ein Ausschnittsbereich (16) oder ein Loch in einem Bereich der isolierenden Harzschicht (11) zwischen den elektrolumineszenten lichtemittierenden Abschnitten (4) angeordnet ist.

## Revendications

1. Un composant électronique émetteur de lumière dans lequel de la lumière émise par un panneau électroluminescent (3) est visible à travers un moulage translucide (1), ledit panneau électroluminescent (3) comprenant une région électroluminescente émettrice de lumière (4) possédant une première surface et une seconde surface opposée à la première surface et une région non émettrice (5), ledit moulage translucide (1) étant disposé au contact de la première surface de la région électroluminescente émettrice de lumière (4), ledit composant électronique émetteur de lumière comprenant une feuille absorbeuse de vibration (6) disposée au contact de la seconde surface de la région électroluminescente émettrice de lumière (4), de manière à absorber la vibration produite durant l'émission lumineuse du panneau électroluminescent (3), ledit composant électronique émetteur de lumière étant **caractérisé par** un connecteur (15) noyé dans la feuille absorbeuse de vibration pour connecter électriquement le panneau électroluminescent et la source d'alimentation.

2. Un composant électronique émetteur de lumière selon la revendication 1, **caractérisé en ce que** ladite région électroluminescente émettrice de lumière (4) comporte une couche d'électrode transparente (41), une couche émettrice (42), une couche diélectrique (43) et une couche d'électrode arrière (44).

3. Un composant électronique émetteur de lumière selon la revendication 1, **caractérisé en ce que** le panneau électroluminescent (3) comprend un film isolant en résine (11) et une pluralité de portions électroluminescentes émettrices de lumière (4) laminées sur ledit film en résine.

4. Un composant électronique émetteur de lumière selon la revendication 3, **caractérisé en ce que** le film en résine (11) possède une épaisseur de 100 µm ou moins.

5. Un composant électronique émetteur de lumière selon la revendication 1, **caractérisé en ce que** ledit composant électronique émetteur de lumière est un panneau de recouvrement ou un clavier.

6. Un composant électronique émetteur de lumière selon la revendication 1, dans lequel le composant électronique émetteur de lumière est un clavier comprenant une touche comportant le dessus de touche translucide (1) possédant une surface de contact, la première surface de la région électroluminescente émettrice de lumière (4) étant disposée au contact du dessus de touche translucide (1) sur la surface de contact et la feuille absorbeuse de vibration (6) étant disposée sur la seconde surface de la portion électroluminescente émettrice de lumière (4) opposée au dessus de touche (1), **caractérisé en ce que** la région électroluminescente émettrice de lumière (4) possède un contour sensiblement identique à celui de ladite surface de contact.

7. Un composant électronique émetteur de lumière selon la revendication 6, **caractérisé en ce que** le clavier comprend le panneau électroluminescent (3) comprenant deux ou plusieurs desdites portions électroluminescentes émettrices de lumière (4) et une région non émettrice (5) qui est douée de souplesse et d'une propriété isolante et qui relie les portions électroluminescentes émettrices de lumière (4).

8. Un composant électronique émetteur de lumière selon la revendication 6, **caractérisé en ce que** le clavier comprend un panneau électroluminescent qui comporte un film isolant en résine (11) sur lequel une pluralité des portions électroluminescentes émettrices de lumière (4) sont laminées, et une région découpée (16) ou un trou sont disposés dans une région du film isolant en résine (11) entre lesdites portions électroluminescentes émettrices de lumière (4).
